# EUROPEAN PATENT APPLICATION

(11) **EP 4 764 909 A1**
(43) Date of publication of application: **24.06.2026**
(21) Application number: 25190692.1
(22) Date of filing: 21.07.2025
(51) Int. Cl.: G06F 21/30, G06F 21/60

(54) **IMAGE FORMING APPARATUS**

(30) Priority: 20.12.2024 JP 2024225664
(71) Applicant: Toshiba TEC Kabushiki Kaisha, Tokyo 141-8562 (JP)
(72) Inventor: WATANABE, Hiroshi, Shinagawa-ku, Tokyo, 141-8562 (JP)
(74) Representative: Hoffmann Eitle

(57) **Abstract**

According to one embodiment, an image forming apparatus includes a user interface, a memory, a communication interface, and a processor. The user interface inputs user information. The memory stores user information. The communication interface communicates with a server storing user information. The processor determines that user authentication is successful when first user information input to the user interface and second user information stored in the memory match with each other, inquires the server about whether the first user information and third user information stored in the server match with each other, and controls the second user information stored in the memory not to be used for user authentication when a signal indicating that the first user information and the third user information do not match with each other is received.

## Description

### CROSS-REFERENCE TO RELATED APPLICATION

This application is based upon and claims the benefit of priority from Japanese Patent Application No. 2024-225664, filed on December 20, 2024, the entire contents of which are incorporated herein by reference.

### FIELD

Embodiments described herein relate generally to an image forming apparatus.

### BACKGROUND

In the related art, an image forming apparatus having a user authentication function of restricting a function of an apparatus main body for a user who is not authenticated is known. In this image forming apparatus, user information used for authenticating users may be managed at once by an external server of the image forming apparatus.

Further, there is known a distributed file system that speeds up an access to a file by caching the file stored in a server to a client in advance and using the file stored in a cache area of the client in response to a file access request without accessing the server.

In the image forming apparatus having the user authentication function that adopts the caching function of the distributed file system, the user authentication can be speeded up using the cached user information. When a user information file (user information) on the server side is updated, there is a problem in that a mismatch occurs between the file (user information) on the server side and the file (user information) stored in the cache area of the image forming apparatus.

For example, when an identification card (ID card) of a user who is retired from a company or the like is reused as an ID card of another user, if user information of the retired user remains in the cache area of the image forming apparatus, there is a possibility that the current user of the ID card is logged in as the retired user such that the image forming apparatus cannot be used. In addition, since the user information remains in the cache area of the image forming apparatus, there is a possibility that the ID card that should be deleted on the server side can be used. In addition, since the user information remains in the cache area of the image forming apparatus, there is a possibility that, even when a personal identification number (PIN) changed on the server side is used, the user cannot pass the authentication such that the image forming apparatus cannot be used.

### SUMMARY OF THE INVENTION

The object of the invention is achieved by the subject-matter of the independent claims. Advantageous embodiments are defined in the dependent claims. Further examples are provided for facilitating the understanding of the invention.

According to a first aspect of the invention, it is provided an image forming apparatus comprising a user interface configured to input user information; a memory configured to store user information; a communication interface configured to communicate with a server storing user information; and a processor configured to determine that user authentication is successful when first user information input to the user interface and second user information stored in the memory match with each other, inquire the server about whether the first user information and third user information stored in the server match with each other, and control the second user information stored in the memory not to be used for user authentication when a signal indicating that the first user information and the third user information do not match with each other is received.

Optionally, in the apparatus according to the first aspect of the invention, when the signal indicating that the first user information and the third user information do not match with each other is received, the processor transitions to a state where user authentication is required.

Optionally, in the apparatus according to the first aspect of the invention, wherein when the signal indicating that the first user information and the third user information do not match with each other is received during execution of a job, the processor controls the job to be stopped.

According to a second aspect of the invention, it is provided a control system comprising an image forming apparatus and a server, wherein the image forming apparatus includes a user interface configured to input user information, a first memory configured to store user information, a first communication interface configured to communicate with the server storing user information, and a first processor configured to determine that user authentication is successful when first user information input to the user interface and second user information stored in the first memory match with each other, inquire the server about whether the first user information and third user information stored in the server match with each other, and control the second user information to be deleted from the first memory when a signal indicating that the first user information and the third user information do not match with each other is received, and the server includes a second memory configured to store user information, a second communication interface configured to communicate with the image forming apparatus, and a second processor configured to determine whether the first user information and the third user information match with each other based on the inquiry and, when the first user information and the third user information do not match with each other, to transmit the signal to the image forming apparatus.

According to a third aspect of the invention, it is provided a control method of an image forming apparatus, the control method comprising determining that user authentication is successful when first user information input to a user interface and second user information stored in a memory match with each other; inquiring a server that is communicable through a communication interface about whether the first user information and third user information stored in the server match with each other, and deleting the second user information from the memory when a signal indicating that the first user information and the third user information do not match with each other is received.

### DESCRIPTION OF THE DRAWINGS

FIG. 1 is a diagram illustrating a configuration example of a control system including an image forming apparatus;
FIG. 2 is a diagram illustrating an example of a stand-by screen displayed by a display;
FIG. 3 is a diagram illustrating an example of a top screen displayed by the display;
FIG. 4 is a diagram illustrating an example of user information stored in a storage in a server;
FIG. 5 is a diagram illustrating an example of user information stored as a cache in a main memory in the image forming apparatus;
FIG. 6 is a diagram illustrating an example of user information stored as a cache in the main memory in the image forming apparatus;
FIG. 7 is a flowchart illustrating an operation regarding a user authentication process of the image forming apparatus;
FIG. 8 is a flowchart illustrating the operation regarding the user authentication process of the image forming apparatus;
FIG. 9 is a flowchart illustrating the operation regarding the user authentication process of the image forming apparatus;
FIG. 10 is a flowchart illustrating the operation regarding the user authentication process of the image forming apparatus;
FIG. 11 is a flowchart illustrating the operation regarding the user authentication process of the image forming apparatus;
FIG. 12 is a flowchart illustrating the operation regarding the user authentication process of the image forming apparatus;
FIG. 13 is a diagram illustrating an example of a setting screen of a to-be-confirmed user function restriction function displayed by the display;
FIG. 14 is a flowchart illustrating an example of an operation of the image forming apparatus; and
FIG. 15 is a flowchart illustrating an example of the operation of the image forming apparatus.

### DETAILED DESCRIPTION

Embodiments provide an image forming apparatus that speeds up user authentication and allows user information on a server and cached user information to match with each other.

In general, according to one embodiment, an image forming apparatus includes a user interface, a memory, a communication interface, and a processor. The user interface inputs user information. The memory stores user information. The communication interface communicates with a server storing user information. The processor determines that user authentication is successful when first user information input to the user interface and second user information stored in the memory match with each other, inquires the server about whether the first user information and third user information stored in the server match with each other, and controls the second user information stored in the memory not to be used for user authentication when a signal indicating that the first user information and the third user information do not match with each other is received.

Hereinafter, an image forming apparatus according to an embodiment will be described with reference to the drawings. The embodiment is not limited to application to the image forming apparatus and, of course, is also applicable to another information processing apparatus including a user authentication function that adopts an external server.

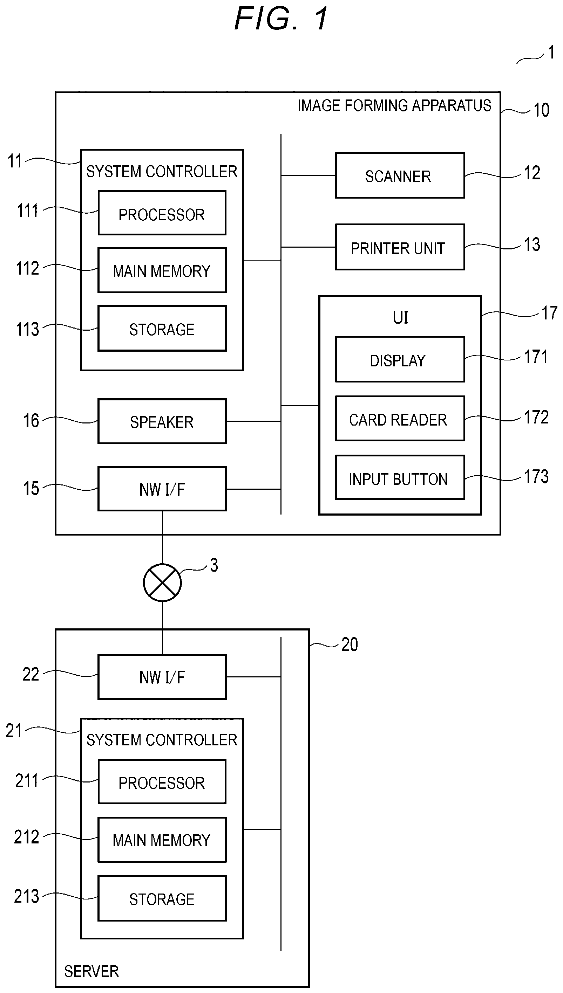

FIG. 1 is a diagram illustrating a configuration example of a control system 1 including an image forming apparatus 10 according to the embodiment.

The control system 1 includes the image forming apparatus 10 and a server 20. The image forming apparatus 10 and the server 20 are communicatively connected to each other through a network 3.

The image forming apparatus 10 is, for example, a multi-function printer (MFP) that executes various processes such as an image forming process while conveying a printing medium. The image forming apparatus 10 is, for example, a solid-state scanning type printer (for example, an LED printer) that scans an LED array to execute various processes such as an image forming process while conveying a printing medium. In addition, the image forming apparatus 10 is an ink jet type printer (ink jet printer) that scans an ink jet head ejecting ink or another type of printer.

For example, the image forming apparatus 10 charges a photosensitive drum and irradiates the photosensitive drum with light corresponding to image data for printing to form an electrostatic latent image on the photosensitive drum. The image forming apparatus 10 attaches toner to the latent image formed on the photosensitive drum and transfers the toner attached to the latent image to a printing medium to form a toner image on the printing medium. In addition, the image forming apparatus 10 applies heat and pressure to the printing medium to which the toner image is transferred such that the toner image is fixed to the printing medium.

The image forming apparatus 10 includes a system controller 11, a scanner 12, a printer unit 13, a communication interface 15, a speaker 16, and a user interface 17. In Fig. 1, the communication interface 15 is abbreviated as NW I/F, and the user interface 17 is abbreviated as UI. The system controller 11, the scanner 12, the printer, the user interface 17, and the communication interface 15 are accommodated in a housing (not illustrated).

The system controller 11 controls the entire image forming apparatus 10. The system controller 11 includes, for example, a processor 111, a main memory 112, and a storage 113.

The processor 111 is an arithmetic element (for example, CPU: Central Processing Unit) that executes arithmetic processing. The processor 111 is a main body of the operation of the system controller 11. The processor 111 executes various processes based on data such as programs stored in the main memory 112. The processor 111 can execute various operations by executing the programs stored in the main memory 112.

The main memory 112 corresponds to a main memory of the image forming apparatus 10. The main memory 112 includes a nonvolatile memory area and a volatile memory area. The main memory 112 stores an operating system or a program in the nonvolatile memory area. The main memory 112 uses the volatile memory area as a work area where data is appropriately rewritten by the processor 111. For example, the main memory 112 includes a read only memory (ROM) as the nonvolatile memory area. For example, the main memory 112 includes a random access memory (RAM) as the volatile memory area.

The storage 113 corresponds to an auxiliary storage part of the image forming apparatus 10. For example, the storage 113 includes a hard disk drive (HDD). In addition to or instead of the HDD, the storage 113 may include a semiconductor storage medium such as a solid state drive (SSD). The storage 113 stores the above-described program, data used for the processor 111 to execute various processes, and data generated during a process of the processor 111.

The printer unit 13 includes, for example, a process unit, an exposure unit, a transfer mechanism, a fixing unit, and a conveying unit.

The process unit includes a photosensitive drum, an electrostatic charger, and a developing unit. The photosensitive drum is a photoconductor including: a cylindrical drum; and a photosensitive layer that is formed on an outer peripheral surface of the drum. The photosensitive drum is rotated by a driving mechanism (not illustrated) at a constant speed.

The electrostatic charger uniformly charges a surface of the photosensitive drum. For example, the electrostatic charger applies a voltage to the photosensitive drum using a charging roller such that the photosensitive drum is uniformly charged to a potential having a negative polarity.

The developing unit attaches the toner to the photosensitive drum. The developing unit includes, for example, a developer container, an agitating mechanism, a developing roller, and a doctor blade. The developer container receives and contains the toner supplied from a toner cartridge. The developer container contains a carrier in advance. The toner supplied from the toner cartridge is agitated by the agitating mechanism together with the carrier to form a developer in which the toner and the carrier are mixed. The carrier is contained in the developer container during manufacturing of the developing unit. The developing roller rotates in the developer container such that the developer is attached to the surface. The doctor blade is a member disposed at a predetermined distance from the surface of the developing roller. The doctor blade removes a part of the developer attached to the surface of the rotating developing roller. As a result, a layer of the developer having a thickness corresponding to the distance between the doctor blade and the surface of the developing roller is formed on the surface of the developing roller.

The exposure unit includes a plurality of light emitting elements. The exposure unit forms a latent image on the photosensitive drum by irradiating the charged photosensitive drum with light from the light emitting elements. The light emitting element is, for example, a light emitting diode (LED). One light emitting element is configured to irradiate one point on the photosensitive drum with light. The plurality of light emitting elements are arranged in a main scanning direction that is a direction parallel to a rotation axis of the photosensitive drum. The exposure unit forms a latent image corresponding to one line on the photosensitive drum by irradiating the photosensitive drum with light from the plurality of light emitting elements arranged in the main scanning direction. Further, the exposure unit forms a latent image corresponding to a plurality of lines by continuously irradiating the rotating photosensitive drum with light.

In the above-described configuration, when the surface of the photosensitive drum charged by the electrostatic charger is irradiated with light from the exposure unit, an electrostatic latent image is formed. When the layer of the developer formed on the surface of the developing roller approaches the surface of the photosensitive drum, the toner in the developer is attached to the latent image formed on the surface of the photosensitive drum. As a result, a toner image is formed on the surface of the photosensitive drum.

The transfer mechanism is configured to transfer the toner image formed on the surface of the photosensitive drum to the printing medium. The transfer mechanism includes a primary transfer belt, a secondary transfer roller, and a plurality of rollers. The transfer mechanism receives the toner image formed on the surface of the photosensitive drum on an outer peripheral surface of the primary transfer belt. The transfer mechanism conveys the toner image on the outer peripheral surface of the primary transfer belt up to a transfer nip where the secondary transfer roller and the outer peripheral surface of the primary transfer belt are in close contact with each other. The transfer mechanism transfers the toner image on the outer peripheral surface of the primary transfer belt to the surface of the printing medium by allowing the printing medium supplied by the conveying unit to pass through the transfer nip.

The fixing unit is configured to fix the toner image transferred to the surface of the printing medium to the surface of the printing medium. The fixing unit includes: a heating member (heating roller) that applies heat to the printing medium; a pressurizing member (press roller) that applies pressure to the printing medium; and a heater that heats the heating roller. The press roller applies pressure to the heating roller to form a fixing nip where the press roller and the heating roller are in close contact with each other. The fixing unit applies heat and pressure to the printing medium by allowing the printing medium to which the toner image is transferred by the transfer mechanism to pass through the fixing nip. As a result, the fixing unit fixes the toner image formed on the surface of the printing medium. The printing medium that passes the fixing nip is discharged to the outside of the image forming apparatus 10 by the conveying unit.

The conveying unit supplies the printing media accommodated in an accommodation unit (not illustrated) to the transfer mechanism and the fixing unit one by one, and discharges the printing medium on which an image is formed to a discharge tray outside of the housing of the image forming apparatus 10.

The scanner 12 is provided, for example, in a main body upper portion of the image forming apparatuses 10. The scanner 12 optically reads an image of a document. For example, the scanner 12 reads an image of a document set on a document table glass. In addition, the scanner 12 may also be configured to read an image of a document that is conveyed by an automatic document feeder (ADF).

The communication interface 15 is an interface for communication with the server 20 through the network 3.

The speaker 16 generates a sound corresponding to an audio signal.

The user interface 17 includes a display 171, an input button 173, and a card reader 172. The display 171 can display an image and can receive an input of an instruction based on a user operation on the display 171. The display 171 includes a display device that can display an image. The display device is, for example, a liquid crystal display 171 or an organic electroluminescence (organic EL) display 171 and is not limited thereto. The display 171 includes an input device that is stacked on the display device and can receive an input of an instruction based on a user operation on the display 171. The user operation on the display 171 is a user operation accompanied by contact with the display 171.

The input button 173 is a button that can be physically pressed by a user. The input button 173 is an interface through which an instruction based on a user operation on the input button 173 can be input.

The card reader 172 reads information from a card equipped with a recording medium that stores information including a card ID. The card is, for example, a contact type or contactless type IC card or magnetic card. User information read from the card by the card reader 172 is supplied to the processor 111.

The image forming apparatus 10 has a user authentication function. The image forming apparatus 10 stores, for example, a program for executing an operation of the user authentication function in the main memory 112. The user authentication function executes user authentication based on user information input through the user interface 17. The user information includes, for example, a user name, a password, a card ID, and a PIN. For example, the card ID is read from a card presented from a user by the card reader 172. The user name, the password, and the PIN are input, for example, using the display 171 and the input button 173 by the user.

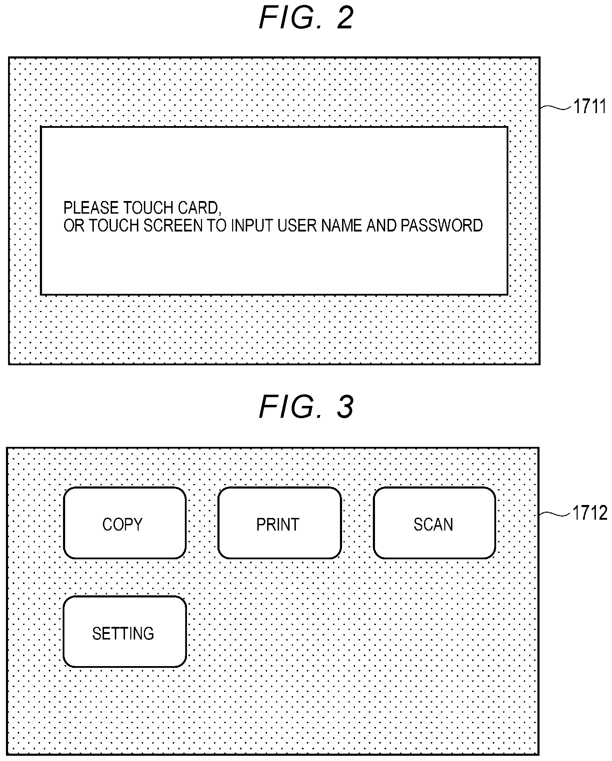

FIG. 2 is a diagram illustrating an example of a stand-by screen 1711 displayed by the display 171. In a state where the user authentication function is enabled and the user is not authenticated, the processor 111 causes the display 171 to display the stand-by screen 1711. The stand-by screen 1711 is a screen that displays information that urges the user who wants to use the image forming apparatus 10 to pass through user authentication. The stand-by screen 1711 displays, for example, a text "PLEASE TOUCH CARD, OR TOUCH SCREEN TO INPUT USER NAME AND PASSWORD".

In a state where the stand-by screen 1711 is displayed by the display 171, the processor 111 does not receive an operation for using a function of the image forming apparatus 10. That is, in a state where the stand-by screen 1711 is displayed, the image forming apparatus 10 is in a state where user authentication is required. Examples of the function of the image forming apparatuses 10 include a copying function of forming an image of a document read by the scanner 12 on a printing medium, a print function of forming an image of a designated file on a printing medium, a scanning function of reading a document using the scanner 12, and a setting function of changing various settings of the image forming apparatus 10.

In a state where the stand-by screen 1711 is displayed by the display 171, the user presents a card to the card reader 172. As a result, the user information is transmitted to the processor 111, and the processor 111 starts a user authentication process for authenticating the user. In addition, in a state where the stand-by screen 1711 is displayed by the display 171, the user touches the screen to transition the display 171 to an input screen. The input screen is a screen where an input of the user information is received by the display 171 and the input button 173. In a state where the input screen is displayed by the display 171, the user information is input by the display 171 and the input button 173. As a result, the user information is transmitted to the processor 111, and the processor 111 starts a user authentication process for authenticating the user.

FIG. 3 is a diagram illustrating an example of a top screen 1712 displayed by the display 171. In FIG. 3, the top screen 1712 is displayed. On the top screen 1712 of FIG. 3, a "copy" button for transition to a screen for using the copying function that is a function of the image forming apparatus 10, a "print" button for transition to a screen for using the print function, a "scan" button for transition to a screen for using the scanning function, and a "setting" button for transition to a screen for using the setting function are arranged. When the user is authenticated, the processor 111 causes the display 171 to display the top screen 1712. The top screen 1712 is a screen that is displayed by the display 171 when the user is authenticated by the user authentication function. In a state where the top screen 1712 is displayed by the display 171, the processor 111 receives the operation for using the function of the image forming apparatus 10.

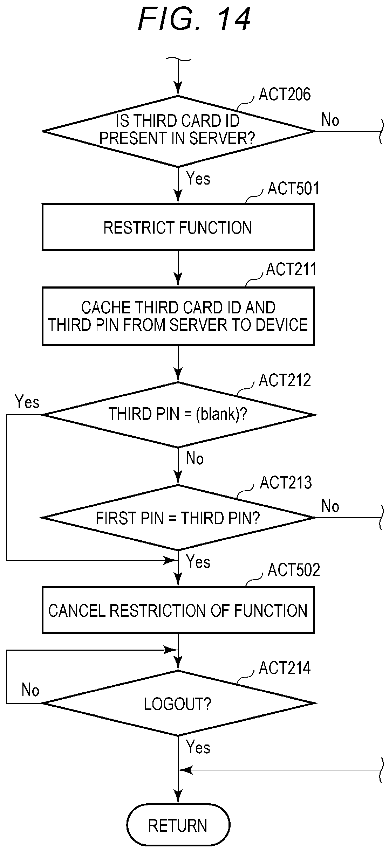

Referring back to the description of FIG. 1, the server 20 is connected to the network, and is communicable with the image forming apparatus 10 through the network 3. The server 20 includes a system controller 21, a memory, and a communication interface 22. In Fig. 14, the communication interface 22 is abbreviated as NW I/F. The system controller 21 and the communication interface 22 are accommodated in a housing (not illustrated).

The system controller 21 controls the entire server 20. The system controller 21 includes, for example, a processor 211, a main memory 212, and a storage 213.

The processor 211 is an arithmetic element (for example, CPU) that executes arithmetic processing. The processor 211 is a main body of the operation of the system controller 21. The processor 211 executes various processes based on data such as programs stored in the main memory 212. The processor 211 can execute various operations by executing the programs stored in the main memory 212.

The main memory 212 corresponds to a main memory part of the server 20. The main memory 212 includes a nonvolatile memory area and a volatile memory area. The main memory 212 stores an operating system or a program in the nonvolatile memory area. The main memory 212 uses the volatile memory area as a work area where data is appropriately rewritten by the processor 211. For example, the main memory 212 includes a read only memory (ROM) as the nonvolatile memory area. For example, the main memory 212 includes a random access memory (RAM) as the volatile memory area.

The storage 213 corresponds to an auxiliary storage part of the server 20. For example, the storage 213 includes a hard disk drive (HDD). In addition to or instead of the HDD, the storage 213 may include a semiconductor storage medium such as a solid state drive (SSD). The storage 213 stores the above-described program, data used for the processor 211 to execute various processes, and data generated during a process of the processor 211.

The communication interface 22 is an interface for communication with the image forming apparatus 10 through the network 3.

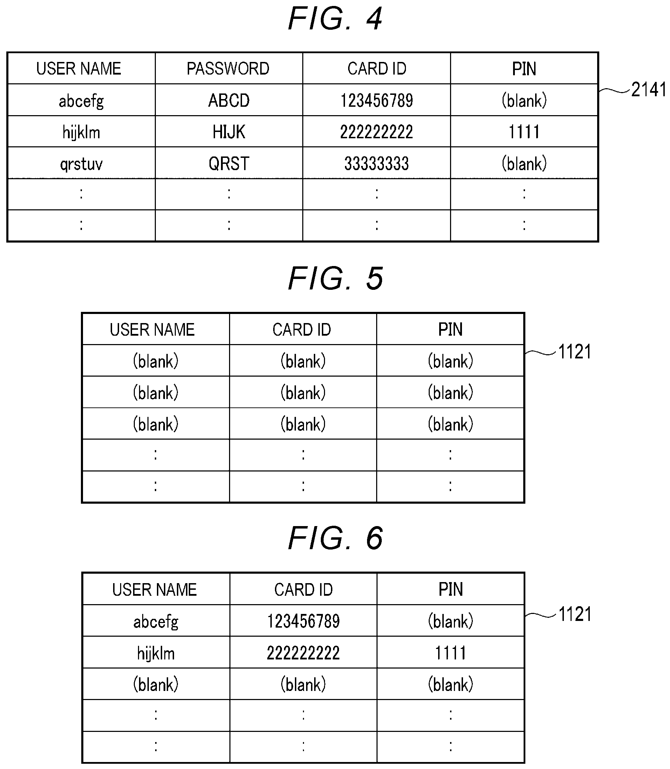

FIG. 4 is a diagram illustrating an example of user information stored in the storage 213 in the server 20. The storage 213 includes a user information database 2141. The user information database 2141 stores the user information that is information regarding users. A record of the user information for each of the users in the user information database 2141 includes a user name, a password, a card ID, and a PIN. The user name is information representing the name of the user. The password is information used for checking whether the user is the person himself or herself. The card ID is identification information for uniquely identifying the card. The PIN is information corresponding to the card ID.

In the user information database 2141 of FIG. 4, "abcefg", "hijklm", and "qrstuv" are registered as the user names. For example, in the record of the user name "abcefg", "ABCD" is registered as the password, and "123456789" is registered as the card ID. In the record of the user name "abcefg", " (blank) " is provided in the item of PIN. The "(blank)" represents that information is not registered.

FIGS. 5 and 6 are diagrams illustrating an example of user information stored as a cache in the main memory 112 in the image forming apparatus 10. The main memory 112 includes a user information database 1121 where the user information is registered as the cache. In the user information database 1121 of the image forming apparatus 10, a user name, a card ID, and a PIN are registered as the cache.

FIG. 5 illustrates the user information database 1121 of the image forming apparatus 10 in a state where the user information is not cached from the server 20. In the user information database 1121 of FIG. 5, the user name, the card ID, and the PIN are not registered, and thus are shown as " (blank)".

FIG. 6 illustrates the user information database 1121 of the image forming apparatus 10 in a state where the user information is cached from the server 20. Specifically, the user information database 1121 of FIG. 6 is in a state where user information regarding the user names "abcefg" and "hijklm" are cached. User information regarding the user name "qrstuv" is not cached, and thus is not registered in the user information database 1121 of FIG. 6.

When the power of the image forming apparatus 10 is turned off, the user information database 1121 stored in the main memory 112 may be stored in the storage 113. When the power of the image forming apparatus 10 is turned on, the user information database 1121 stored in the storage 113 may be read to the main memory 112.

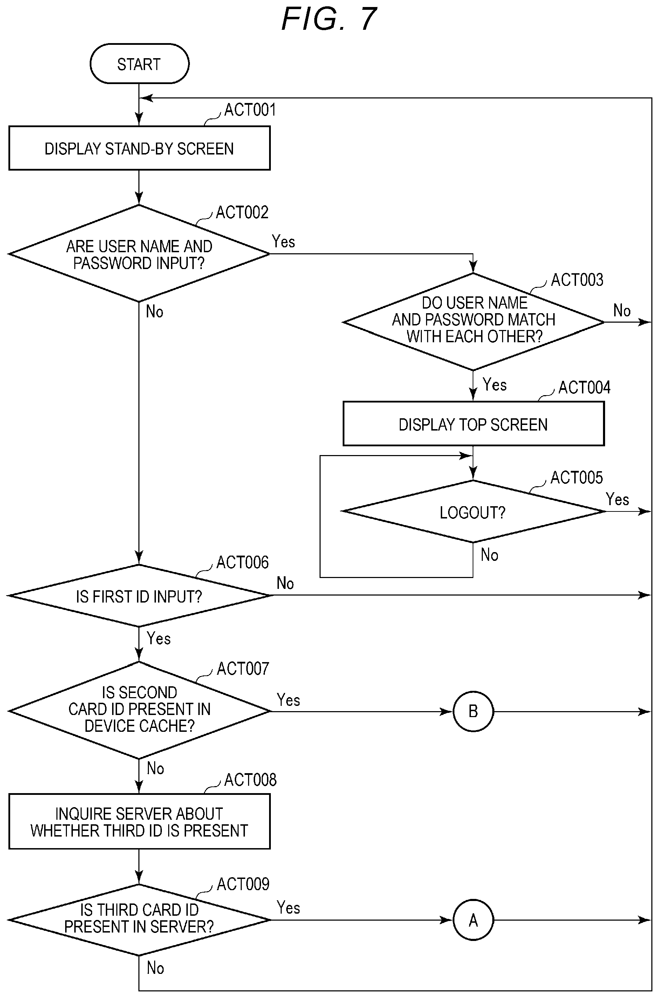

An operation regarding the user authentication process of the image forming apparatus 10 will be described. FIGS. 7 to 12 are flowcharts illustrating the operation regarding the user authentication process of the image forming apparatus 10. For easy understanding of the description, the user information input from the user interface 17 will be referred to as first user information, the user information registered in the user information database 1121 of the image forming apparatus 10 will be referred to as second user information, and the user information registered in the user information database 2141 of the server 20 will be referred to as third user information. In addition, the items of the record of the first user information will be referred to as "first OO". For example, the user name of the first user information will be referred to as "first user name". Likewise, the items of the records of the second user information and the third user information will be referred to as "second OO" and "third OO", respectively.

First, the description will be made with reference to Fig. 7. In a state where the user authentication function is enabled and the user is not authenticated, the processor 111 causes the display 171 to display the stand-by screen 1711 (ACT001). The processor 111 displays the stand-by screen 1711 or the input screen until the first user name and the first password are input (ACT002) or the first card ID is input (ACT006).

When the first user name and the first password are input, the processor 111 transmits the input first user name and the input first password to the server 20. The server 20 compares the received first user name and the received first password to the third user name and the third password of the user information database 2141. When the first user name and the first password match with the third user name and the third password, the server 20 transmits a signal indicating that the first user name and the first password match with the third user name and the third password to the image forming apparatus 10. When the first user name and the first password do not match with the third user name and the third password, the server 20 transmits a signal indicating that the first user name and the first password do not match with the third user name and the third password to the image forming apparatus 10. When the signal indicating that the first user name and the first password do not match with the third user name and the third password is received (ACT003, No), the processor 111 displays the stand-by screen 1711. When the signal indicating that the first user name and the first password match with the third user name and the third password is received (ACT003, Yes), the processor 111 displays the top screen 1712 as user authentication completion (ACT004). When the logout of the user whose user authentication is completed is detected, the processor 111 causes the display 171 to display the stand-by screen 1711 (ACT005, Yes).

The description will be made with reference to Fig. 7. When the first card ID is input from the card reader 172 (ACT006, Yes), the processor 111 checks whether the second card ID that matches with the first card ID is present in the user information database 1121 of the main memory 112 (ACT007). When the second card ID that matches with the first card ID is not present in the user information database 1121 of the main memory 112 (ACT007, No), the processor 111 transmits an inquiry about whether the third card ID that matches with the first card ID is present in the user information database 2141 of the server 20 (ACT008).

When a signal indicating that the third card ID that matches with the first card ID is not present is received from the server 20 (ACT009, No), the processor 111 causes the display 171 to display the stand-by screen 1711. When a signal indicating that the third card ID that matches with the first card ID is present is received from the server 20 (ACT009, Yes), the processor 111 caches the third card ID that matches with the first card ID and the third PIN associated with the third card ID from the server 20 to the user information database 1121 of the main memory 112 (ACT101). Further, when the third card ID that matches with the first card ID is present and the third PIN is registered in the signal received from the server 20 (ACT102, No), the processor 111 causes the display 171 to display an input screen for inputting the PIN (ACT103).

An example will be described with reference to Fig. **4****.** When a card ID "222222222" is received from the card reader 172, the processor 111 transmits the card ID to the server 20. When the card ID "222222222" is present in the user information database 2141, the server 20 transmits a signal including an answer that the card ID is "present" and an answer that the PIN is "1111" to the image forming apparatus 10. In addition, for example, when the card ID received from the server 20 is "123456789", the server 20 transmits a signal including an answer that the card ID is "present" and an answer that the PIN is "(blank)" to the image forming apparatus 10.

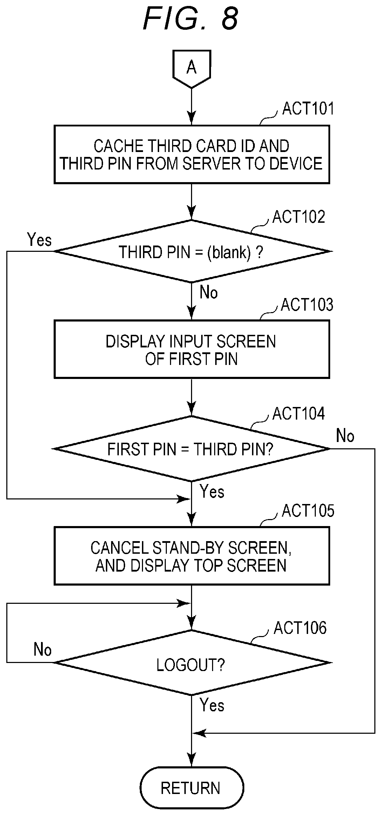

The description will be made with reference to Fig. 8. When the input first PIN does not match with the third PIN (ACT104, No), the processor 111 causes the display 171 to display the stand-by screen 1711. When the input first PIN matches with the third PIN (ACT104, Yes), the processor 111 displays the top screen 1712 as user authentication completion (ACT105). In addition, when the third card ID that matches with the first card ID is present and the third PIN is "(blank)" in the signal received from the server 20 (ACT102, Yes), the processor 111 displays the top screen 1712 as user authentication completion (ACT105). When the logout of the user whose user authentication is completed is detected, the processor 111 causes the display 171 to display the stand-by screen 1711 (ACT106, Yes).

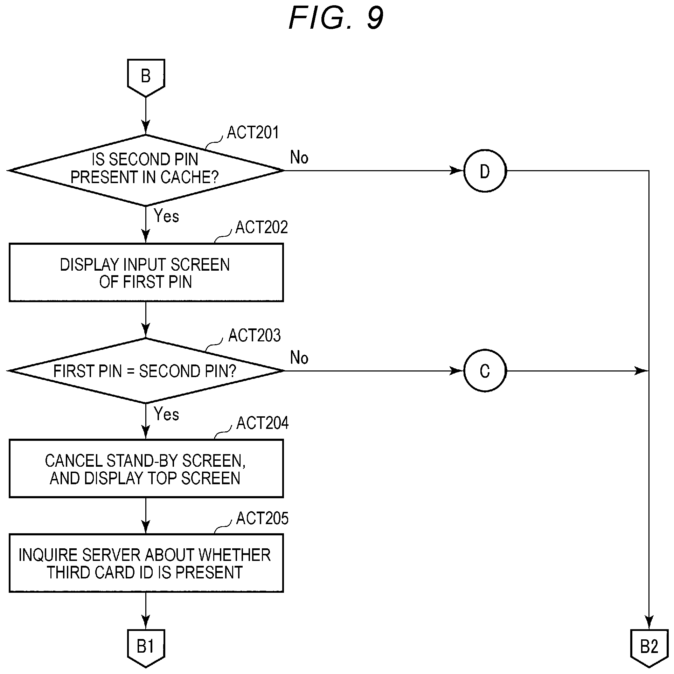

The description will be made with reference to Fig. **9****.** When the second card ID that matches with the first card ID is present in the user information database 1121 of the main memory 112 (ACT007, Yes), the processor 111 checks whether the second PIN is registered in the user information database 1121 of the main memory 112 (ACT201). When the second PIN is registered in the user information database 1121 of the main memory 112 (ACT201, Yes), the processor 111 causes the display 171 to display an input screen for inputting the PIN (ACT202). When the input first PIN matches with the second PIN (ACT203, Yes), the processor 111 displays the top screen 1712 as user authentication completion (ACT204). Next, the processor 111 transmits an inquiry about whether the third card ID that matches with the first card ID is present in the user information database 2141 of the server 20 (ACT205).

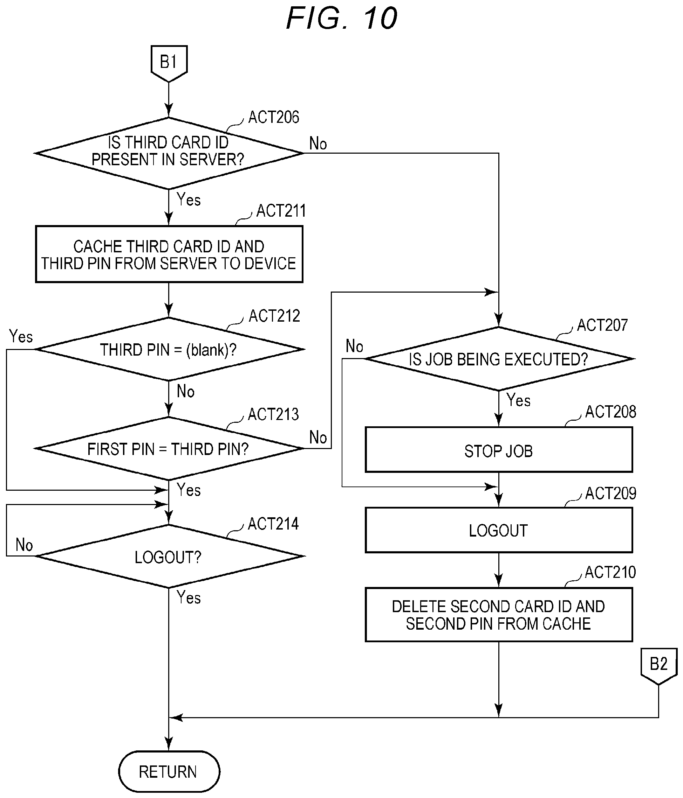

The description will be made with reference to Fig. 10. When a signal indicating that the third card ID that matches with the first card ID is not present is received from the server 20 (ACT206, No), the processor 111 checks whether a job is being executed (ACT207). When the job is being executed (ACT207, Yes), the processor 111 stops the job (ACT208). The job is, for example, image formation by the printer unit 13 or document reading by the scanner 12. When the job is stopped (ACT208) or when the job is not being executed (ACT207, No), the processor 111 logs out the user whose user authentication is completed (ACT209). Next, the processor 111 deletes the second card ID used for the user authentication and the second PIN from the user information database 1121 of the main memory 112 (ACT210). When the logout of the user whose user authentication is completed is detected, the processor 111 causes the display 171 to display the stand-by screen 1711.

When a signal indicating that the third card ID that matches with the first card ID is present is received from the server 20 (ACT206, Yes), the processor 111 caches the third card ID that matches with the first card ID and the third PIN associated with the third card ID from the server 20 to the user information database 1121 of the main memory 112 (ACT211). Further, when the third card ID that matches with the first card ID is present and the third PIN is registered in the signal received from the server 20 (ACT212, No), the processor 111 checks whether the first PIN input in ACT202 matches with the third PIN (ACT213). When the first PIN does not match with the third PIN (ACT213, No), the processor 111 proceeds to the process of ACT207. When the first PIN input in ACT202 matches with the third PIN (ACT213, Yes), the processor 111 maintains the state where the user authentication is completed. In addition, when the third card ID that matches with the first card ID is present and the third PIN is "(blank)" in the signal received from the server 20 (ACT212, Yes), the processor 111 maintains the state where the user authentication is completed. When the logout of the user whose user authentication is completed is detected, the processor 111 causes the display 171 to display the stand-by screen 1711 (ACT214, Yes).

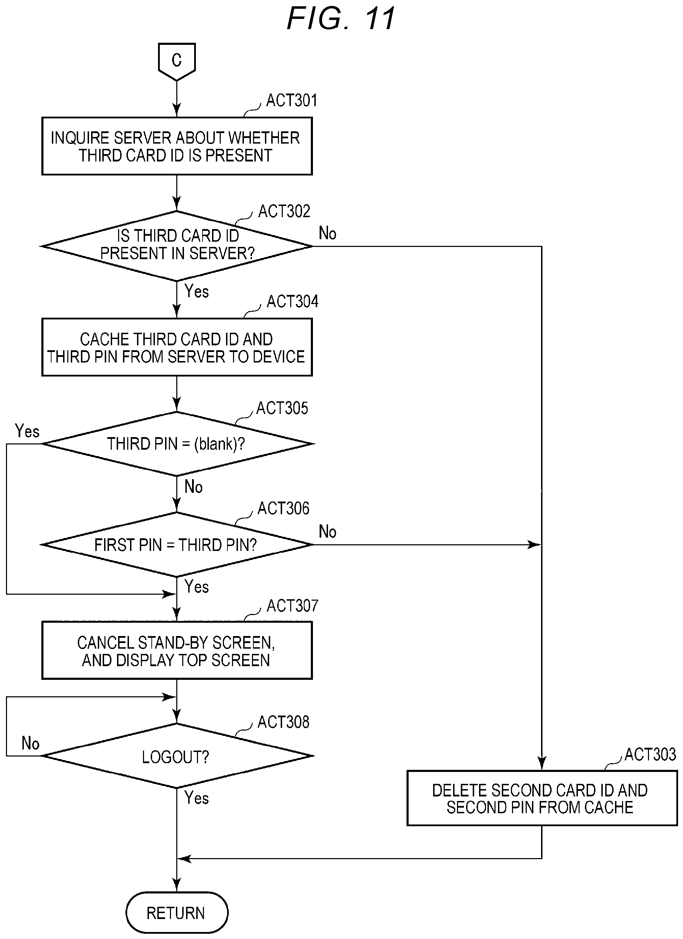

The description will be made with reference to Fig. 11. When the first PIN input in ACT202 does not match with the second PIN (ACT203, No), the processor 111 transmits an inquiry about whether the third card ID that matches with the first card ID is present in the user information database 2141 of the server 20 (ACT301). When a signal indicating that the third card ID that matches with the first card ID is not present is received from the server 20 (ACT302, No), the processor 111 deletes the second card ID that matches with the first card ID input in ACT006 and the second PIN that is associated with the second card ID from the user information database 1121 of the main memory 112 (ACT303). Next, the processor 111 causes the display 171 to display the stand-by screen 1711.

When a signal indicating that the third card ID that matches with the first card ID is present is received from the server 20 (ACT302, Yes), the processor 111 caches the third card ID that matches with the first card ID and the third PIN associated with the third card ID from the server 20 to the user information database 1121 of the main memory 112 (ACT304). Further, when the third card ID that matches with the first card ID is present and the third PIN is registered in the signal received from the server 20 (ACT305, No), the processor 111 checks whether the first PIN input in ACT202 matches with the third PIN (ACT306). When the first PIN does not match with the third PIN (ACT306, No), the processor 111 proceeds to the process of ACT303. When the first PIN matches with the third PIN (ACT306, Yes), the processor 111 displays the top screen 1712 as user authentication completion (ACT307). When the logout of the user whose user authentication is completed is detected, the processor 111 causes the display 171 to display the stand-by screen 1711 (ACT308, Yes).

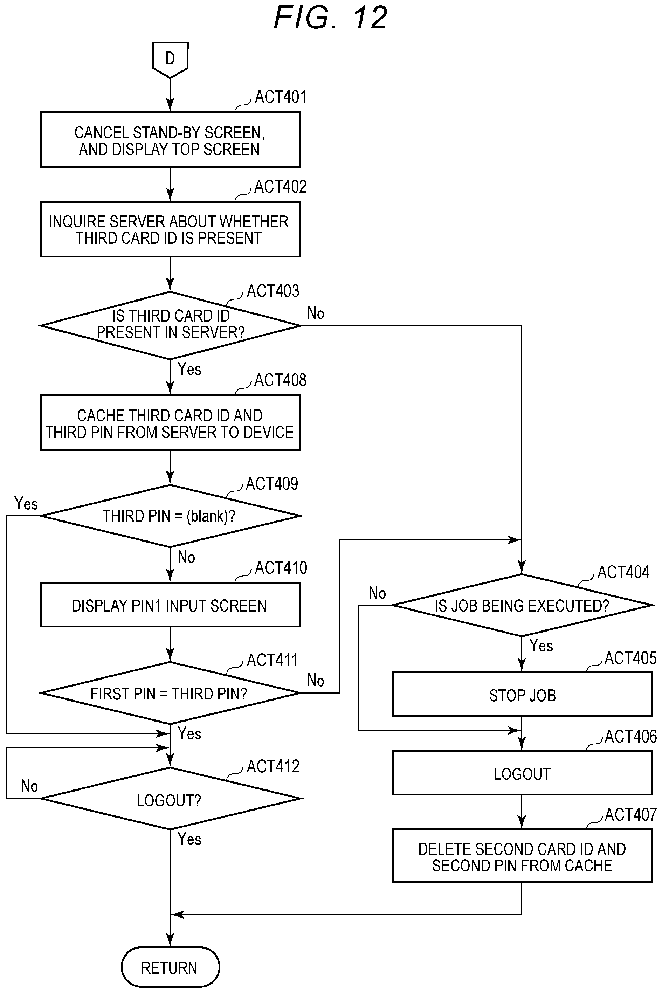

The description will be made with reference to Fig. 12. When the second card ID that matches with the first card ID is present in the user information database 1121 of the main memory 112 (ACT007, Yes) and the second PIN is not registered in the user information database 1121 of the main memory 112 (ACT201, No), the processor 111 displays the top screen 1712 as user authentication completion (ACT204). Next, the processor 111 transmits an inquiry about whether the third card ID that matches with the first card ID is present in the user information database 2141 of the server 20 (ACT402).

When a signal indicating that the third card ID that matches with the first card ID is not present is received from the server 20 (ACT403, No), the processor 111 checks whether a job is being executed (ACT404). When the job is being executed (ACT404, Yes), the processor 111 stops the job (ACT405). When the job is stopped (ACT405) or when the job is not being executed (ACT404, No), the processor 111 logs out the user whose user authentication is completed (ACT406). Next, the processor 111 deletes the second card ID used for the user authentication and the second PIN associated with the second card ID from the user information database 1121 of the main memory 112 (ACT407). When the logout of the user whose user authentication is completed is detected, the processor 111 causes the display 171 to display the stand-by screen 1711.

When a signal indicating that the third card ID that matches with the first card ID is not present is received from the server 20 (ACT403, Yes), the processor 111 caches the third card ID that matches with the first card ID and the third PIN associated with the third card ID from the server 20 to the user information database 1121 of the main memory 112 (ACT408). Further, when the third card ID that matches with the first card ID is present and the third PIN is registered in the signal received from the server 20 (ACT409, No), the processor 111 causes the display 171 to display an input screen for inputting the PIN (ACT410). When the input first PIN does not match with the third PIN (ACT411, No), the processor 111 proceeds to the process of ACT404. When the input first PIN matches with the third PIN (ACT411, Yes), the processor 111 maintains the state where the user authentication is completed. In addition, when the third card ID that matches with the first card ID is present and the third PIN is "(blank)" in the signal received from the server 20 (ACT409, Yes), the processor 111 maintains the state where the user authentication is completed. When the logout of the user whose user authentication is completed is detected, the processor 111 causes the display 171 to display the stand-by screen 1711 (ACT412, Yes).

When the processor 111 inquires the server 20 about whether the third card ID is present, if the third card ID is not present in the user information database 2141 of the server 20, the processor 111 may notify the user of the absence of the third card ID, for example, by emitting a beep sound from the speaker 16 or by causing the display 171 to display a message.

As described above, the image forming apparatus 10 according to the present embodiment determines that user authentication is successful when first user information input to the user interface 17 and second user information stored in the memory match with each other, inquires the server 20 about whether the first user information and third user information stored in the server 20 match with each other, and control the second user information to be deleted from the memory when a signal indicating that the first user information and the third user information do not match with each other is received. Further, when the signal indicating that the first user information and the third user information do not match with each other is received, the image forming apparatus 10 transitions to a state where user authentication is required. Further, when the signal indicating that the first user information and the third user information do not match with each other is received during execution of a job, the image forming apparatus 10 stops the job.

The image forming apparatus 10 can speed up user authentication and can allow user information on the server 20 and user information cached to the image forming apparatus 10 to match with each other.

Further, in the present embodiment, a to-be-confirmed user function restriction function may be provided. In the to-be-confirmed user function restriction function, when user authentication is completed based on the first user information and the second user information and the image forming apparatus 10 inquires the server 20 about whether the third card ID that matches with the first card ID is present in the user information database 2141 (for example, ACT205 and ACT402), a function that can be used in the image forming apparatus 10 is restricted while waiting for an answer to the inquiry.

For example, the image forming apparatus 10 stores a program for executing the to-be-confirmed user function restriction function in the main memory 112. In the inquiry-to-be-confirmed user function restriction function, as described above, when user authentication is completed based on the first user information and the second user information and the image forming apparatus 10 inquires the server 20 about whether the third card ID that matches with the first card ID is present in the user information database 2141, a function that can be used in the image forming apparatus 10 is restricted while waiting for an answer to the inquiry.

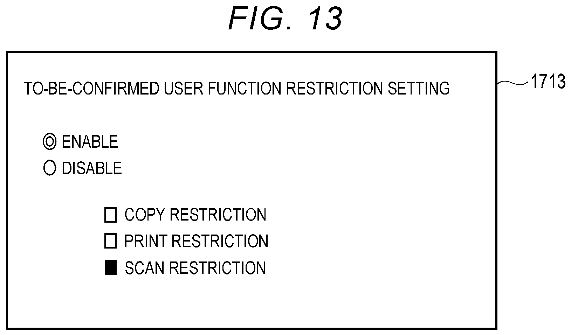

FIG. 13 is a diagram illustrating an example of a to-be-confirmed user function restriction function setting screen 1713 displayed by the display 171. On the to-be-confirmed user function restriction function setting screen 1713 of FIG. 13, a radio button for setting the inquiry-to-be-confirmed user function restriction function to be enabled or disabled is displayed, and "ENABLE" is selected. In addition, a check box for restricting each of the functions of the image forming apparatus 10 is displayed, and "SCAN RESTRICTION" is selected. That is, by setting the inquiry-to-be-confirmed user function restriction function as illustrated in FIG. 13, when user authentication is completed based on the first user information and the second user information and the inquiry is transmitted to the server 20, the processor 111 receives an operation for using the copying function and the print function and does not receive an operation for using the scanning function while waiting for an answer to the inquiry to the server 20.

The state where the processor 111 does not receive the operation for using each of the functions of the image forming apparatus 10 through the to-be-confirmed user function restriction function is, for example, a state where, regarding the button of each of the functions displayed on the top screen 1712, the button of the function that is set such that the processor 111 does not receive the operation is grayed out to prevent transition to a screen for using the function even when the button of the function is selected, or the button is not displayed to disable selection of the button of the function.

The to-be-confirmed user function restriction function is set, for example, by a user who has the administrator authority of the image forming apparatus 10. The setting of the to-be-confirmed user function restriction function may be applied to all of the users who use the image forming apparatus 10 according to the present embodiment, or may be individually applied to each of the users.

FIG. 14 is a flowchart illustrating an example of the operation of the image forming apparatus 10 when the to-be-confirmed user function restriction function is enabled. FIG. 14 is a flowchart where the processes when the to-be-confirmed user function restriction function is enabled are added focusing on the portion of ACT206, ACT211, and ACT214 of FIG. 10. Each of the processes of FIG. 10 not illustrated in FIG. 14 is the same as that illustrated in FIG. 10.

The description will be made with reference to Fig. 14. When a signal indicating that the third card ID that matches with the first card ID is present is received from the server 20 (ACT206, Yes), the processor 111 restricts the function of the image forming apparatus 10 that is selected to be restricted in the setting of the to-be-confirmed user function restriction function (ACT501). The processor 111 caches the third card ID and the third PIN associated with the third card ID from the server 20 to the user information database 1121 of the main memory 112 (ACT211). Further, when the third card ID that matches with the first card ID is present and the third PIN is registered in the signal received from the server 20 (ACT212, No), the processor 111 checks whether the first PIN input in ACT202 matches with the third PIN (ACT213). When the first PIN does not match with the third PIN (ACT213, No), the processor 111 proceeds to the process of ACT207. When the first PIN input in ACT202 matches with the third PIN (ACT213, Yes), the processor 111 cancels the restriction of the function of the image forming apparatus 10 restricted in ACT501 (ACT502), and maintains the state where the user authentication is completed. In addition, when the third card ID that matches with the first card ID is present and the third PIN is "(blank)" in the signal received from the server 20 (ACT212, Yes), the processor 111 cancels the restriction of the function of the image forming apparatus 10 restricted in ACT501 (ACT502), and maintains the state where the user authentication is completed. When the logout of the user whose user authentication is completed is detected, the processor 111 causes the display 171 to display the stand-by screen 1711 (ACT214, Yes).

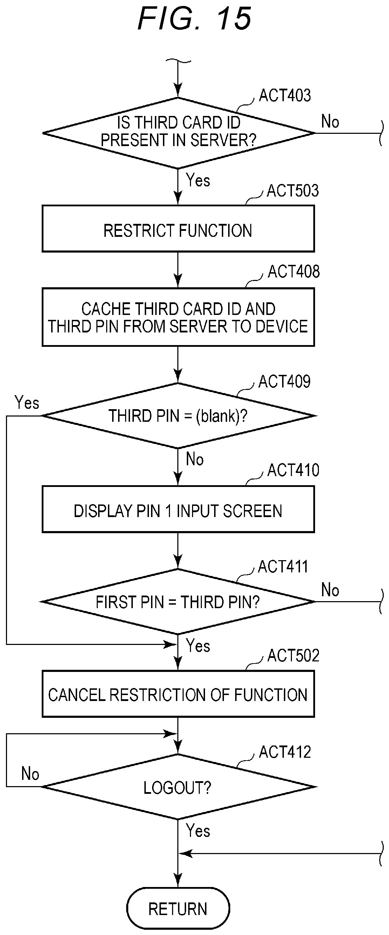

FIG. 15 is a flowchart illustrating an example of the operation of the image forming apparatus 10 when the to-be-confirmed user function restriction function is enabled. FIG. 15 is a flowchart where the processes when the to-be-confirmed user function restriction function is enabled are added focusing on the portion of ACT403, ACT408, and ACT412 of FIG. 12. Each of the processes of FIG. 12 not illustrated in FIG. 15 is the same as that illustrated in FIG. 12.

The description will be made with reference to Fig. 15. When a signal indicating that the third card ID that matches with the first card ID is not present is received from the server 20 (ACT403, Yes), the processor 111 restricts the function of the image forming apparatus 10 that is selected to be restricted in the setting of the to-be-confirmed user function restriction function (ACT503). The processor 111 caches the third card ID and the third PIN associated with the third card ID from the server 20 to the user information database 1121 of the main memory 112 (ACT408). Further, when the third card ID that matches with the first card ID is present and the third PIN is registered in the signal received from the server 20 (ACT409, No), the processor 111 causes the display 171 to display an input screen for inputting the PIN (ACT410). When the input first PIN does not match with the third PIN (ACT411, No), the processor 111 proceeds to the process of ACT404. When the input first PIN matches with the third PIN (ACT411, Yes), the processor 111 cancels the restriction of the function of the image forming apparatus 10 restricted in ACT503 (ACT504), and maintains the state where the user authentication is completed. In addition, when the third card ID that matches with the first card ID is present and the third PIN is "(blank)" in the signal received from the server 20 (ACT409, Yes), the processor 111 cancels the restriction of the function of the image forming apparatus 10 restricted in ACT503 (ACT504), and maintains the state where the user authentication is completed. When the logout of the user whose user authentication is completed is detected, the processor 111 causes the display 171 to display the stand-by screen 1711 (ACT412, Yes).

As described above, in the image forming apparatus 10 according to the present embodiment, when user authentication is completed based on the first user information and the second user information and the image forming apparatus 10 inquires the server 20 about whether the third card ID that matches with the first card ID is present in the user information database 2141, a function that can be used in the image forming apparatus 10 can be restricted while waiting for an answer to the inquiry.

### [Modification Examples]

In the image forming apparatus 10 according to the above-described embodiment, the method of caching a part of the user information of the server 20 to the main memory 112 is used. In a modification example, replicas of all of the user information of the server 20 are stored in the main memory 112. That is, all of the user information stored in the user information database 2141 of the server 20 are stored in the main memory 112 instead of caching the third card ID that matches with the first card ID and the third PIN that is associated with the third card ID from the server 20 to the user information database 1121 of the main memory 112. Specifically, in ACT101, ACT211, ACT304, and ACT408 in the flowchart of the operation of the image forming apparatus 10 according to the above-described embodiment, all of the user information stored in the user information database 2141 of the server 20 are stored in the main memory 112.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions as defined by the appended claims. The accompanying claims and their equivalents are intended to cover such forms or modifications as would fall within the scope of the inventions.

## Claims

1. An image forming apparatus comprising:
a user interface configured to input user information;
a memory configured to store user information;
a communication interface configured to communicate with a server storing user information; and
a processor configured to
determine that user authentication is successful when first user information input to the user interface and second user information stored in the memory match with each other,
inquire the server about whether the first user information and third user information stored in the server match with each other, and
control the second user information stored in the memory not to be used for user authentication when a signal indicating that the first user information and the third user information do not match with each other is received.

2. The apparatus according to claim 1,
wherein when the signal indicating that the first user information and the third user information do not match with each other is received, the processor transitions to a state where user authentication is required.

3. The apparatus according to claim 1 or 2,
wherein when the signal indicating that the first user information and the third user information do not match with each other is received during execution of a job, the processor controls the job to be stopped.

4. A control system comprising an image forming apparatus and a server,
wherein the image forming apparatus includes
a user interface configured to input user information,
a first memory configured to store user information,
a first communication interface configured to communicate with the server storing user information, and
a first processor configured to
determine that user authentication is successful when first user information input to the user interface and second user information stored in the first memory match with each other,
inquire the server about whether the first user information and third user information stored in the server match with each other, and
control the second user information to be deleted from the first memory when a signal indicating that the first user information and the third user information do not match with each other is received, and
the server includes
a second memory configured to store user information,
a second communication interface configured to communicate with the image forming apparatus, and
a second processor configured to determine whether the first user information and the third user information match with each other based on the inquiry and, when the first user information and the third user information do not match with each other, to transmit the signal to the image forming apparatus.

5. A control method of an image forming apparatus, the control method comprising:
determining that user authentication is successful when first user information input to a user interface and second user information stored in a memory match with each other;
inquiring a server that is communicable through a communication interface about whether the first user information and third user information stored in the server match with each other, and
deleting the second user information from the memory when a signal indicating that the first user information and the third user information do not match with each other is received.
